# EUROPEAN PATENT APPLICATION

(11) **EP 4 578 762 A1**
(43) Date of publication of application: **02.07.2025**
(21) Application number: 23856247.4
(22) Date of filing: 26.06.2023
(51) Int. Cl.: B62D 3/04, F16H 1/16, F16H 57/12

(54) **WORM COMPRESSION AND SUPPORT MECHANISM FOR ELECTRIC POWER STEERING SYSTEM**

(30) Priority: 26.08.2022 CN 202211029042
(71) Applicant: Bosch Huayu Steering Systems Co., Ltd., Shanghai 201821 (CN)
(72) Inventor: HU, Shaoxiong, Shanghai 201821 (CN); YANG, Jingyuan, Shanghai 201821 (CN); DONG, Hang, Shanghai 201821 (CN); LI, Shan, Shanghai 201821 (CN)
(74) Representative: Bittner, Bernhard
(86) International application number: PCT/CN2023/102276
(87) International publication number: WO 2024/041155

(57) **Abstract**

A worm compression and support mechanism for an electric power steering system, comprising a housing (1), wherein a worm (5) and a worm wheel (6) are provided inside the housing (1); an upper end of the worm wheel (6) is in fit connection with the worm (5); one end of the worm (5) is sleeved with a big-end bearing (3), and the other end thereof is sleeved with a small-end bearing (7); a compression assembly is provided on an outer edge side of the small-end bearing (7); the compression assembly closely abuts against an outer ring of the small-end bearing (7); a support assembly is provided on an upper side of the small-end bearing (7); the support assembly is located above the compression assembly; and a lower surface of the support assembly closely abuts against the compression assembly. A pre-compression force is supplied by the compression assembly, a support assembly is arranged above the compression assembly, and the lower surface of the support assembly presses against the compression assembly to provide a limiting effect on the compression assembly in a vertical direction, and the compression assembly provides damping and hard limiting at the top and a side of the worm (5) to support and limit the oscillation of the worm (5) and to absorb the impact of the worm (5).

## Description

This application claims the right of the priority of Chinese patent application 2022110290429, filed on August 26, 2022. The contents of the Chinese patent application are incorporated herein by reference in their entirety.

### TECHNICAL FIELD

The present disclosure relates to the technical field of electric power steering systems, specifically a worm compression and support mechanism for an electric power steering system.

### BACKGROUND

The vehicle steering system generally includes a steering wheel, a steering column, an intermediate shaft, a steering gearbox, a tie rod and other components. Column-type electric power steering system (hereinafter referred to as EPSc), dual pinion electric power steering system (hereinafter referred to as EPSdp), and single pinion electric power steering system (hereinafter referred to as EPSp), etc. all belong to the electric power steering systems (hereinafter referred to as EPS) for vehicles, their primary function is to convert the rotational movement of the steering wheel into the left-and-right swing of the wheels, thereby realizing the power steering function of the vehicle. EPSc provides power torque through the power motor installed at the steering column, EPSdp provides power torque through the power motor installed at the second pinion of the steering gearbox, and EPSp provides power torque through the power motor installed at the first pinion, the deceleration mechanism reduces speed and increases torque, to provide the corresponding power torque to the steering system, thereby realizing the designed power function. Generally, the deceleration mechanism uses a worm wheel and worm deceleration mechanism, this sort of deceleration mechanism can provide a large reduction ratio and occupy a small space.

At present, due to tolerances and installation errors, etc. of manufacturing parts, there are issues such as excessive friction torque or excessive free clearance in the worm wheel and worm mechanism in EPS, this ultimately leads to excessive rotational friction torque, affecting the steering hand feel, or causing knocking noise from the worm wheel and worm, as well as knocking noise from the worm housing when driving on a bad road. In order to reduce rotational friction torque and eliminate knocking noise, it is necessary to control the clearance of the worm wheel and worm deceleration mechanism to zero clearance and not make the worm wheel and worm fit too tightly, and to provide a certain damping in the radial movement direction of the worm. Generally, the worm needs to be supported by two ball bearings on the left-and-right, due to the cumulative error in the coaxiality of the two bearings after the parts are assembled, the bearings are under improper load, which can lead to reduced bearing load capacity, stiff bearing rotation causing rolling noise, reduced bearing service life, and excessive rolling friction torque. At present, the solutions that provide zero clearance include the solution of bracket bearing, the solution of adding a separate spring plunger at one end of the worm, etc., however, these solutions all have many drawbacks, such as: excessive parts leading to large tolerance accumulation, high costs and installation difficulties, a large fluctuation range of spring clamping force leading to the inability to effectively eliminate the clearance of the worm wheel and worm deceleration mechanism, and insufficient bearing load capacity.

### CONTENT OF THE PRESENT INVENTION

In order to overcome the deficiencies of the prior art, the present invention provides a worm compression and support mechanism for electric power steering system, through five solutions with different structures, thereby it can eliminate the radial clearance of the worm wheel and worm deceleration mechanism, enhance steering hand feel, and reduce knocking noise.

In order to realize the above purpose, a worm compression and support mechanism for electric power steering system is designed, including a worm, a worm wheel, a big-end bearing, a small-end bearing, and a housing, wherein the worm wheel and the worm are arranged within the housing, the upper end of the worm wheel is matched with and connected to the worm, one end of the worm is sleeved with a big-end bearing, the other end of the worm is sleeved with a small-end bearing, a compression assembly is arranged on the outer edge side of the small-end bearing, the compression assembly is in tight contact with the outer ring of the small-end bearing, a support assembly is arranged on the upper side of the small-end bearing, the support assembly is arranged above the compression assembly, and the lower surface of the support assembly is in tight contact with the compression assembly.

In this solution, the pre-tightening force is provided by the compression assembly, the support assembly is arranged above the compression assembly, and the lower surface of the support assembly compresses the compression assembly, to limit the compression assembly in the vertical direction. The compression assembly provides top damping and hard limiting at the top of the worm, and provides side damping and hard limiting at the side of the worm, to support and limit the swings of the worm and to absorb the impact of the worm, thereby eliminating the clearance of the worm wheel and worm mechanism, reducing noise, and improving the hand feel; reducing the number of machined surfaces of the housing, simplifying installation, and reducing costs; reducing the outer dimensions of the housing, and occupying a smaller installation space. The pre-tightening force for the up-and-down swinging movement is provided by the compression assembly, thereby eliminating the clearance of the worm wheel and worm deceleration mechanism; the vertical cushioning of the worm is provided by the compression assembly, avoiding noise caused by up-and-down impacts; the left-and-right swinging cushioning face is provided by the compression assembly, avoiding noise caused by left-and-right swinging impacts; the vertical compression spring feature is provided, that is, the elastic force for vertical compression is provided by the compression assembly, which can conveniently adjust the required vertical compression stiffness, thereby providing the required vertical compression force, controlling the clearance of the worm wheel and worm deceleration mechanism to zero clearance, and avoiding noise caused by the clearance of the deceleration mechanism; the appropriate vertical compression force is provided by the compression assembly, which can avoid excessive friction torque of the deceleration mechanism and improve the steering hand feel.

To realize the above purpose, a worm compression and support mechanism for electric power steering system is designed, including a worm, a worm wheel, a big-end bearing, a small-end bearing, a housing, a clamping nut, and a worm hub, wherein the worm wheel and the worm are arranged within the housing, the upper end of the worm wheel is matched with and connected to the worm, one end of the worm is sleeved with the big-end bearing and the worm hub, and the clamping nut is sleeved with the outer side of the big-end bearing; the other end of the worm is sleeved with the small-end bearing, a compression assembly is arranged on the outer edge side of the small-end bearing, and a support assembly is arranged above the upper side of the small-end bearing.

The compression assembly is one of a first compression assembly, a second compression assembly, a third compression assembly, a fourth compression assembly, and a fifth compression assembly; the support assembly is one of a first support assembly, a second support assembly, a third support assembly, a fourth support assembly, and a fifth support assembly; the first compression assembly is matched with the first support assembly; the second compression assembly is matched with the second support assembly; the third compression assembly is matched with the third support assembly; the fourth compression assembly is matched with the fourth support assembly; and the fifth compression assembly is matched with the fifth support assembly.

The first compression assembly includes a first blade spring and a first pre-tightening rubber, the upper part of the outer edge of the small-end bearing is sleeved with the first blade spring, and the lower part of the outer edge of the small-end bearing is sleeved with the first pre-tightening rubber.

The first blade spring is a butterfly-shaped structure, the top of the first blade spring is an arc-shaped middle end face, the top of the left and right sides of the middle end face are respectively connected to spring buckles, the bottom of the left and right sides of the middle end face are respectively connected to one end of a spring arm, the other end of the spring arm is connected to a first clamping boss, a first spring waist-shaped hole is arranged in the middle portion of the middle end face, the spring arm consists of two inwardly inclined bent panels, and the cross-section of the spring arm is a C-shaped structure.

The first pre-tightening rubber is a U-shaped structure, ribs are respectively connected to the left and right sides of the upper part of the first pre-tightening rubber, and a semicylindrical protrusion is connected to the first pre-tightening rubber below the ribs.

The first support assembly includes a first adjusting bolt and a first clamping pin, the bottom of the first clamping pin is arranged on the top of the small-end bearing, and the first adjusting bolt is arranged on the top of the first clamping pin.

An external thread is arranged at the outer edge of the first adjusting bolt, the bottom of the first adjusting bolt is a plane, and the top of the first adjusting bolt is connected to an inner hexagonal recess.

The upper part of the first clamping pin is a cylindrical structure, the lower part of the first clamping pin is a waist-shaped column structure, a soft rubber is embedded in the lower part of the first clamping pin, and the upper part and the lower part of the first clamping pin are one-piece structure, a positioning square hole is arranged on the top of the first clamping pin, and the bottom of the first clamping pin is an arc-shaped structure.

The second compression assembly includes a second blade spring and a second pre-tightening rubber, the second pre-tightening rubber is sleeved at the outer edge of the small-end bearing, and a rear side buckle of the second pre-tightening rubber is connected to the second blade spring.

The second blade spring is a U-shaped structure, the top of the second blade spring is an arc structure, a second spring waist-shaped hole is arranged on the top of the second blade spring, square holes are respectively arranged on the left and right sides of the second blade spring, an inwardly bent trapezoidal inclined edge is arranged on the second blade spring above the square holes, the bottom of the trapezoidal inclined edge is connected to the second blade spring, and the top of the trapezoidal inclined edge is connected to a second clamping boss.

The second pre-tightening rubber is a ring-shaped structure, the top inner side of the second pre-tightening rubber is connected to a snap-fit groove, the inner side faces on the left and right sides of the middle portion of the second pre-tightening rubber are respectively connected to arc columns, the inner side face of the arc column is a plane, the inner side face of the arc column is connected to a boss, several protrusions are respectively arranged on the front end face of the second pre-tightening rubber at the connection between the arc column and the second pre-tightening rubber.

The second support assembly includes a second adjusting bolt and a second clamping pin, the bottom of the second clamping pin is arranged on the top of the small-end bearing, and the second adjusting bolt is arranged on the top of the second clamping pin, and the structures of the second adjusting bolt and the second clamping pin are consistent with the structures of the first adjusting bolt and the first clamping pin.

The third compression assembly includes a third blade spring and a third pre-tightening rubber, the third blade spring is sleeved at the outer edge of the small-end bearing, and the third pre-tightening rubber is snap-fit connected to the rear side of the third blade spring.

The third blade spring is an "Ω" shaped structure, the top of the third blade spring is a plane, the two sides of the bottom of the third blade spring warp outwards respectively, and ends of outward warp are connected to a third clamping boss.

The third pre-tightening rubber is a semicircular ring structure, semicylinders are respectively connected to the rear ends on the left and right sides of the third pre-tightening rubber, the rear end at the top of the third pre-tightening rubber is connected to a top rubber, and a center hole is arranged at the center of the top rubber.

The third support assembly includes a third adjusting bolt, the third adjusting bolt is arranged on the top of the small-end bearing, the structure of the third adjusting bolt is that a small cylinder is connected to the bottom plane of the first adjusting bolt, and the small cylinder of the third adjusting bolt is embedded in the center hole of the top rubber at the top of the third pre-tightening rubber.

The fourth compression assembly includes a fourth pre-tightening rubber, the fourth pre-tightening rubber is sleeved at the lower part of the outer edge of the small-end bearing; the fourth pre-tightening rubber is a semicircular arc ring structure, the left-and-right end faces of the top of the fourth pre-tightening rubber are respectively connected to an outer protruding structure, and the inner side face of the outer protruding structure is a rectangular plane.

The fourth support assembly includes a first support sleeve, a first helical spring, a rubber pad, and a first adjusting screw, the first adjusting screw is arranged on the top of the small-end bearing , the lower part of the first adjusting screw is sleeved with the first helical spring, the outer side of the first helical spring is sleeved with the first support sleeve, the first adjusting screw located at the top of the first support sleeve is sleeved with the rubber pad, and the bottom of the first support sleeve is connected to the top end face of the small-end bearing.

The first adjusting screw is a T-shaped structure, an external thread is arranged on the upper outer edge of the first adjusting screw, the rubber pad is sleeved at the middle portion of the first adjusting screw, and the lower part of the first adjusting screw is sleeved with the first helical spring.

The first support sleeve is a cylindrical structure, a recess being matched with and connected to the lower part of the first adjusting screw is arranged on the top of the first support sleeve, and the bottom of the first support sleeve is an arc surface.

The fifth compression assembly includes a fifth pre-tightening rubber, the upper and lower parts of the outer edge of the small-end bearing are respectively sleeved with the fifth pre-tightening rubbers; and the fifth pre-tightening rubber is a rubber ring.

The fifth support assembly includes a second support sleeve, a second helical spring, and a second adjusting screw, the second adjusting screw is arranged on the top of the small-end bearing, the lower part of the second adjusting screw is sleeved with the second helical spring, the outer side of the second helical spring is sleeved with the second support sleeve, and the bottom face of the second support sleeve is connected to the top end face of the small-end bearing.

The structure of the second adjusting screw is consistent with the structure of the first adjusting screw; the structure of the second helical spring is consistent with the structure of the first helical spring; and the structure of the second support sleeve is consistent with the structure of the first support sleeve.

The first compression assembly and the first support assembly are arranged within a first housing matched with the first compression assembly and the first support assembly; the second compression assembly and the second support assembly are arranged within a second housing matched with the second compression assembly and the second support assembly; the third compression assembly and the third support assembly are arranged within a third housing matched with the third compression assembly and the third support assembly; the fourth compression assembly and the fourth support assembly are arranged within a fourth housing matched with the fourth compression assembly and the fourth support assembly; and the fifth compression assembly and the fifth support assembly are arranged within a fifth housing matched with the fifth compression assembly and the fifth support assembly. The positive progressive effect of the present invention is that: the pre-tightening force is provided by the compression assembly, the support assembly is arranged above the compression assembly, and the lower face of the support assembly compresses the compression assembly, to limit the compression assembly in the vertical direction. The compression assembly provides top damping and hard limiting at the top of the worm, and provides side damping and hard limiting at the side of the worm relying on the compression assembly, to support and limit the swings of the worm and to absorb the impact of the worm, thereby eliminating the clearance of the worm wheel and worm mechanism, reducing noise, and improving the hand feel; reducing the number of machined surfaces of the housing, simplifying installation, and reducing costs; reducing the outer dimensions of the housing, and occupying a smaller installation space. The pre-tightening force for the up-and-down swinging movement is provided by the compression assembly, thereby eliminating the clearance of the worm wheel and worm deceleration mechanism; the vertical cushioning of the worm is provided by the compression assembly, avoiding noise caused by up-and-down impacts; the left-and-right swinging cushioning face is provided by the compression assembly, avoiding noise caused by left-and-right swinging impacts; the vertical compression spring feature is provided by the compression assembly, which can conveniently adjust the required vertical compression stiffness, thereby providing the required vertical compression force, controlling the clearance of the worm wheel and worm deceleration mechanism to zero clearance, and avoiding noise caused by the clearance of the deceleration mechanism; the appropriate vertical compression force is provided by the compression assembly, which can avoid excessive friction torque of the deceleration mechanism and improve the steering hand feel.

### BRIEF DESCRIPTION OF THE DRAWINGS

Fig. 1 is a cross-sectional view of the structure of the present invention.
Fig. 2 and Fig. 3 are cross-sectional views of the structure of Embodiment 1 of the present invention.
Fig. 4 and Fig. 5 are schematic diagrams of the structure of the first blade spring in Embodiment 1.
Fig. 6 is a schematic diagram of the structure of the first pre-tightening rubber in Embodiment 1.
Fig. 7 is a schematic diagram of the structure of the first adjusting bolt in Embodiment 1.
Fig. 8 and Fig. 9 are schematic diagrams of the structure of the first clamping pin in Embodiment 1.
Fig. 10 is a schematic diagram of the structure of the first housing in Embodiment 1.
Fig. 11 and Fig. 12 are cross-sectional views of the structure of Embodiment 2 of the present invention.
Fig. 13 is a schematic diagram of the structure of the connection between the second blade spring and the second pre-tightening rubber in Embodiment 2.
Fig. 14 is a schematic diagram of the structure of the second blade spring in Embodiment 2.
Fig. 15 is a schematic diagram of the structure of the second pre-tightening rubber in Embodiment 2.
Fig. 16 is a schematic diagram of the structure of the second housing.
Fig. 17 and Fig. 18 are cross-sectional views of the structure of Embodiment 3 of the present invention.
Fig. 19 is a schematic diagram of the structure of the connection between the third blade spring and the third pre-tightening rubber in Embodiment 3.
Fig. 20 is a schematic diagram of the structure of the third blade spring in Embodiment 3.
Fig. 21 is a schematic diagram of the structure of the third pre-tightening rubber in Embodiment 3.
Fig. 22 is a schematic diagram of the structure of the third adjusting bolt in Embodiment 3.
Fig. 23 is a schematic diagram of the structure of the third housing.
Fig. 24 and Fig. 25 are cross-sectional views of the structure of Embodiment 4 of the present invention.
Fig. 26 is a schematic diagram of the structure of the fourth pre-tightening rubber in Embodiment 4.
Fig. 27 is a schematic diagram of the structure of the adjusting screw in Embodiment 4.
Fig. 28 is a schematic diagram of the structure of the support sleeve in Embodiment 4.
Fig. 29 is a schematic diagram of the structure of the fourth housing.
Fig. 30 and Fig. 31 are cross-sectional views of the structure of Embodiment 5 of the present invention.
Fig. 32 is a schematic diagram of the structure of the connection between the small-end bearing and the fifth pre-tightening rubber in Embodiment 5.
Fig. 33 is a schematic diagram of the structure of the present invention installed in the EPSc steering system.
Fig. 34 is a schematic diagram of the structure of the present invention installed in the EPSdp steering system.
Fig. 35 is a schematic diagram of the structure of the present invention installed in the EPSp steering system.

### DETAILED DESCRIPTION OF THE PREFERRED EMBODIMENT

The following provides a further description of the present invention based on the drawings.

### Embodiment 1

This embodiment provides a worm compression and support mechanism for an electric power steering system, including a worm 5, a worm wheel 6, a big-end bearing 3, a small-end bearing 7, a housing 1, a clamping nut 2, and a worm hub 4, wherein the worm wheel 6 and the worm 5 are arranged within the housing 1, the upper end of the worm wheel 6 is matched with and connected to the worm 5, one end of the worm 5 is sleeved with the big-end bearing 3 and the worm hub 4, the outer side of the big-end bearing 3 is sleeved with the clamping nut 2; the other end of the worm 5 is sleeved with the small-end bearing 7, a compression assembly is arranged on the outer edge of the small-end bearing 7, the compression assembly is in tight contact with the outer ring of the small-end bearing 7, a support assembly is arranged above the small-end bearing 7, positioned above the compression assembly, with the lower surface of the support assembly is in tight contact with the compression assembly. The pre-tightening force is provided by the compression assembly, the support assembly is arranged above the compression assembly, and the lower surface of the support assembly compresses the compression assembly, to limit the compression assembly in the vertical direction. The compression assembly provides top damping and hard limiting at the top of the worm 5, and provides side damping and hard limiting at the side of the worm 5 relying on the compression assembly, to support and limit the swings of the worm 5 and to absorb the impact of the worm 5, thereby eliminating the clearance of the worm wheel and worm 5 mechanism, reducing noise, and improving the hand feel; reducing the number of machined surfaces of the housing, simplifying installation, and reducing costs; reducing the outer dimensions of the housing, and occupying a smaller installation space. The pre-tightening force for the up-and-down swinging movement is provided by the compression assembly, thereby eliminating the clearance of the worm wheel and worm deceleration mechanism; the vertical cushioning of the worm 5 is provided by the compression assembly, avoiding noise caused by up-and-down impacts; the left-and-right swinging cushioning face is provided by the compression assembly, avoiding noise caused by left-and-right swinging impacts; the vertical spring feature is provided by the compression assembly, which can conveniently adjust the required vertical compression stiffness, thereby providing the required vertical compression force, controlling the clearance of the worm wheel and worm 5 deceleration mechanism to zero clearance, and avoiding noise caused by the clearance of the deceleration mechanism; and the appropriate vertical compression force is provided by the compression assembly, which can avoid excessive friction torque of the deceleration mechanism and improve the steering hand feel.

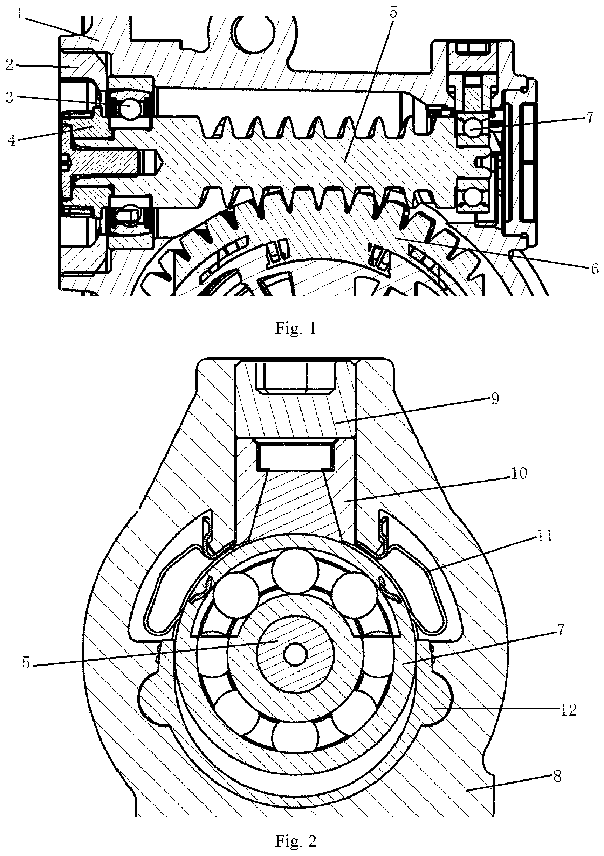

As shown in Fig. 1, the output shaft of the power motor of the steering system is connected to the worm hub 4 through a coupling, the worm hub 4 is connected to the worm 5 through a spline, thereby applying the power from the output shaft of the motor to the worm 5. The outer ring of the big-end bearing 3 is placed in the housing bearing hole through a clearance fit, the clamping nut 2 is connected to the housing 1 through threads, clamping the bearing end face into the housing bearing hole, the inner ring of the big-end bearing 3 is installed on the big-end bearing seat of the worm 5 through an interference fit, the big-end bearing 3 allows the worm 5 to perform a small amplitude swinging movement around the bearing center in the circumferential direction. The inner ring of the small-end bearing 7 is installed on the small-end bearing seat of the worm 5 through an interference fit, and the outer ring is placed in the housing cavity with a clearance. The worm wheel 6 is molded with the output shaft in one-piece, and is supported within the housing 1 through bearings, the worm wheel 6 and the worm 5 are in meshing transmission through helical gears, the limiting pin is inserted into the waist-shaped hole of the housing 1 through a clearance fit, the buckle of the blade spring is snapped tightly onto the groove of the housing, that is, the compression assembly is snapped tightly onto the groove of the housing through the connection method of the buckle.

As a preferred embodiment, as shown in Fig. 2- Fig. 10, the compression assembly is a first compression assembly, the first compression assembly includes a first blade spring 11 and a first pre-tightening rubber 12, the upper part of the outer edge of the small-end bearing 7 is sleeved with the first blade spring 11, and the lower part of the outer edge of the small-end bearing 7 is sleeved with the first pre-tightening rubber 12. Pre-tightening force is provided through the first compression assembly. The first blade spring 11 provides top damping and hard limiting at the top of the worm 5, side damping and hard limiting are provided at the side of the worm 5 relying on the first blade spring 11 and the first pre-tightening rubber 12, to support and limit the swings of the worm 5 and absorb the impact of the worm 5, thereby eliminating the clearance in the worm wheel and worm 5 mechanism, reducing noise, and improving the hand feel; it reduces the number of machined surfaces on the housing, simplifies installation, and lowers costs; and it reduces the outer dimensions of the housing, and occupies a smaller installation space. The pre-tightening force for the up-and-down swinging movement is provided by the compression assembly, thereby eliminating the clearance of the worm wheel and worm deceleration mechanism; the vertical cushioning of the worm 5 is provided by the first compression assembly, avoiding noise caused by up-and-down impacts; the left-and-right swinging cushioning face is provided by the compression assembly, avoiding noise caused by left-and-right swinging impacts; the vertical compression spring feature is provided by the blade spring 11, that is, the elastic force in vertical direction is provided by the blade spring, which can conveniently adjust the required vertical compression stiffness, thereby providing the required vertical compression force, controlling the clearance of the worm wheel and worm deceleration mechanism to zero clearance, and avoiding noise caused by the clearance of the deceleration mechanism; the appropriate vertical compression force is provided by the compression assembly, which can avoid excessive friction torque of the deceleration mechanism and improve the steering hand feel.

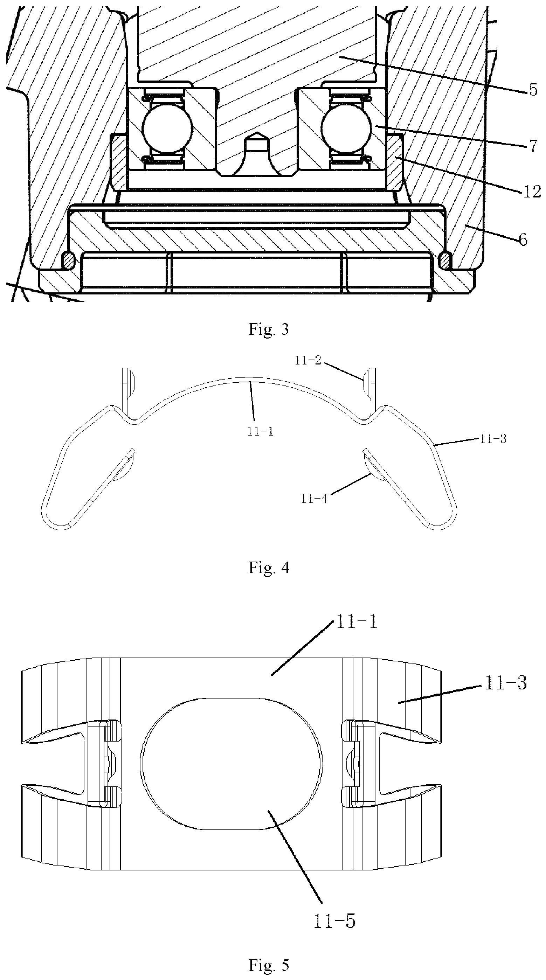

As a preferred embodiment, as shown in Fig. 4 and Fig. 5, the first blade spring 11 is a butterfly-shaped structure, the top of the first blade spring 11 is an arc-shaped middle end face 11-1, the top of the left-and-right ends of the middle end face 11-1 are respectively connected to a spring buckle 11-2, the bottom of the left-and-right ends of the middle end face 11-1 are respectively connected to one end of the spring arm 11-3, the other end of the spring arm 11-3 is connected to a first clamping boss 11-4, a first spring waist-shaped hole 11-5 is arranged in the middle portion of the middle end face 11-1, the spring arm 11-3 consists of two inwardly inclined bent panels, and the cross-section of the spring arm 11-3 is a C-shaped structure. The spring buckle 11-2 of the first blade spring 11 is symmetrically designed and is snapped tightly to a spring snap-fit groove of the housing through an interference fit, the middle end face 11-1 at the top of the first blade spring 11 fits with the housing for axial positioning of the first blade spring 11, the spring arm 11-3 is placed in the installation cavity of the housing with a clearance, the first clamping boss 11-4 is in compressing contact with the outer ring of the small-end bearing 7, the first clamping boss 11-4 is symmetrically arranged, and the pre-tightening forces in the horizontal direction cancel each other out, providing a pre-tightening force to the top of the worm 5 in the vertical direction; the first blade spring 11 provides vertical cushioning for the worm 5, avoiding noise caused by up-and-down impacts; it controls the clearance of the worm wheel and worm deceleration mechanism to achieve zero clearance, avoiding noise caused by the clearance of the deceleration mechanism; it can prevent excessive friction torque of the deceleration mechanism, enhancing the steering hand feel. The first blade spring 11 is a butterfly-shaped structure, which facilitates the simplification of the structural configuration of the first blade spring 11, the cross-section of the spring arm 11-3 is a C-shaped structure, which facilitates the simplification of the structural configuration of the spring arm 11-3, and the above configuration facilitates realizing the one-piece configuration of the first blade spring 11, facilitating the production and manufacturing of the first blade spring 11.

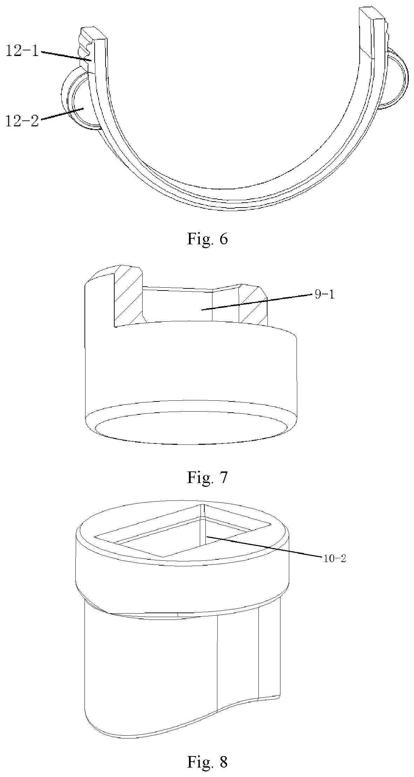

As a preferred embodiment, as shown in Fig. 6, the first pre-tightening rubber 12 is a U-shaped structure, ribs 12-1 are respectively connected to the left and right sides of the upper part of the first pre-tightening rubber 12, and a semicylindrical protrusion 12-2 is connected to the first pre-tightening rubber 12 below the rib 12-1. The rib 12-1 of the first pre-tightening rubber 12 is interference-compressed between the outer ring of the small-end bearing 7 and the side soft rubber support face, providing a side pre-tightening force, the left-and-right swinging cushioning face for the worm 5 is provided by the first pre-tightening rubber 12, avoiding noise caused by left-and-right swinging impacts; and the semicylindrical protrusion 12-2 is in clearance fit with the housing, ensuring that the first pre-tightening rubber 12 can be assembled within the housing.

As a preferred embodiment, the first support assembly includes a first adjusting bolt and a first clamping pin, the bottom of the first clamping pin 10 is arranged on the top of the small-end bearing 7, and the first adjusting bolt 9 is arranged on the top of the first clamping pin 10. The first clamping pin 10 is inserted into the waist-shaped hole of the first housing 8, and the first adjusting bolt 9 is compressed and fitted to the first clamping pin 10, facilitating a no-clearance fixation among the first adjusting bolt 9, the first clamping pin 10, and the small-end bearing 7, to limit the small-end bearing 7 and provide a pre-tightening force.

As a preferred embodiment, as shown in Fig. 7, an external thread is arranged on the outer edge of the first adjusting bolt 9, the bottom of the first adjusting bolt 9 is a plane, and the top of the first adjusting bolt 9 is connected with an inner hexagonal recess 9-1. The external thread of the first adjusting bolt 9 is matched with and connected to the threaded hole of the first housing 8 through thread engagement, the bottom plane of the first adjusting bolt 9 is compressed and fitted to the top plane of the first clamping pin 10, an inner hexagonal recess 9-1 is arranged to facilitate the adjustment of the thread insertion angle, ensuring a no-clearance fixation among the first adjusting bolt 9, the first clamping pin 10, and the small-end bearing 7, and providing axially limitation the small-end bearing 7 and providing a pre-tightening force.

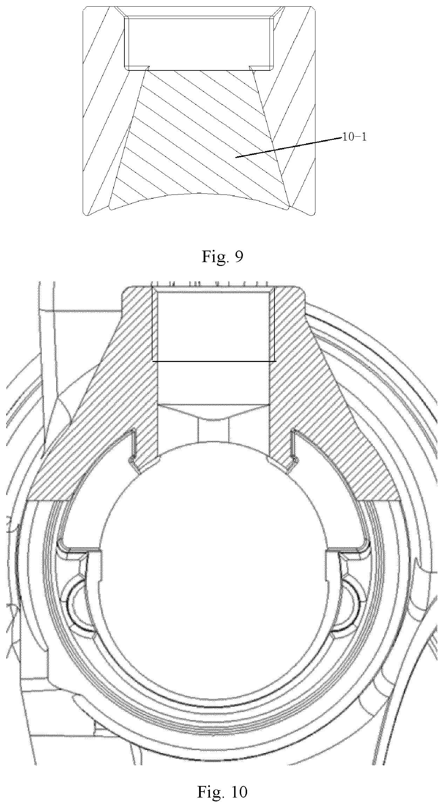

As a preferred embodiment, as shown in Fig. 8 and Fig. 9, the upper part of the first clamping pin 10 is a cylindrical structure, and the lower part of the first clamping pin 10 is a waist-shaped column structure; a soft rubber 10-1 is embedded in the lower part of the first clamping pin 10, and the upper part of the first clamping pin 10 and the lower part of the first clamping pin 10 are one-piece structure; a positioning square hole 10-2 is arranged on the top of the first clamping pin 10, and the bottom of the first clamping pin 10 is an arc-shaped structure. The waist-shaped cylindrical surface of the first clamping pin 10 is inserted into the waist-shaped hole of the first housing 8 and the first spring waist-shaped hole 11-5 of the first blade spring 11 with a clearance , the cylindrical surface of the first clamping pin 10 is inserted into the circular hole of the first housing 8 with a clearance , the matched length allows the first clamping pin 10 to move up and down within the first housing 8, there is a clearance between the bottom arc-shaped structure and the outer ring of the small-end bearing 7, which facilitates the cylindrical surface of the first clamping pin 10 to be compressed and fitted to the small-end bearing 7, to provide limitation and pre-tightening force to the small-end bearing 7. The soft rubber arc surface of the soft rubber 10-1 is fitted and compressed to the outer ring of the small-end bearing 7, to limit the small-end bearing 7 in the vertical direction and provide pre-tightening force. The upper part of the first clamping pin 10 and the lower part of the first clamping pin 10 are one-piece structure, which simplifies the structure of the first clamping pin 10 and facilitates the production and manufacturing of the first clamping pin 10.

When the worm wheel 6 and the worm 5 engage in meshing transmission, the worm 5 will drive the small-end bearing 7 to produce a radial swinging movement, when the meshing force is smaller, the spring force of the small-end pre-tightening force mechanism will compress the worm 5 against the worm wheel 6, thereby eliminating the gear clearance between the worm wheel 6 and the worm 5, the compression force of the soft rubber of the small-end side cushioning mechanism eliminates the clearance between the small-end bearing 7 and the first housing 8, when the meshing force is larger, the hard material arc surface of the small-end pre-tightening force mechanism contacts the outer ring of the small-end bearing 7, thereby limiting the vertical position of the small-end bearing 7, the small-end bearing 7 of the small-end side cushioning mechanism contacts the small-end bearing 7 side of the first housing 8 with hard limiting, thereby limiting the left-and-right position of the small-end bearing 7.

As a preferred embodiment, the support assembly is a first support assembly, the first support assembly is matched with the first compression assembly, the first compression assembly and the first support assembly are arranged within the first housing 8 matched with the first compression assembly and the first support assembly. The first housing 8 is matched with the first support assembly and the first compression assembly, facilitating the installation of the first support assembly and the first compression assembly, the first support assembly and the first compression assembly are limited through the first housing 8, thereby facilitating the first support assembly to limit the first compression assembly in the vertical direction, and facilitating the first compression assembly to provide top damping and hard limiting at the top of the worm 5, and to provide side damping and hard limiting at the side of the worm 5, to support and limit the swings of the worm 5 and to absorb the impact of the worm, thereby eliminating the clearance of the worm wheel and worm mechanism, reducing noise, and improving the hand feel.

As a preferred embodiment, the worm compression and support mechanism for the electric power steering system further includes a clamping nut 2 and a worm hub 4, one end of the worm 5 is sleeved with the worm hub 4. The clamping nut 2 is connected to the housing 1 through threads, compressing the bearing end face into the housing bearing hole, the worm hub 4 is connected to the worm 5 through a spline, thereby applying the power force from the motor output shaft to the worm 5.

### Embodiment 2

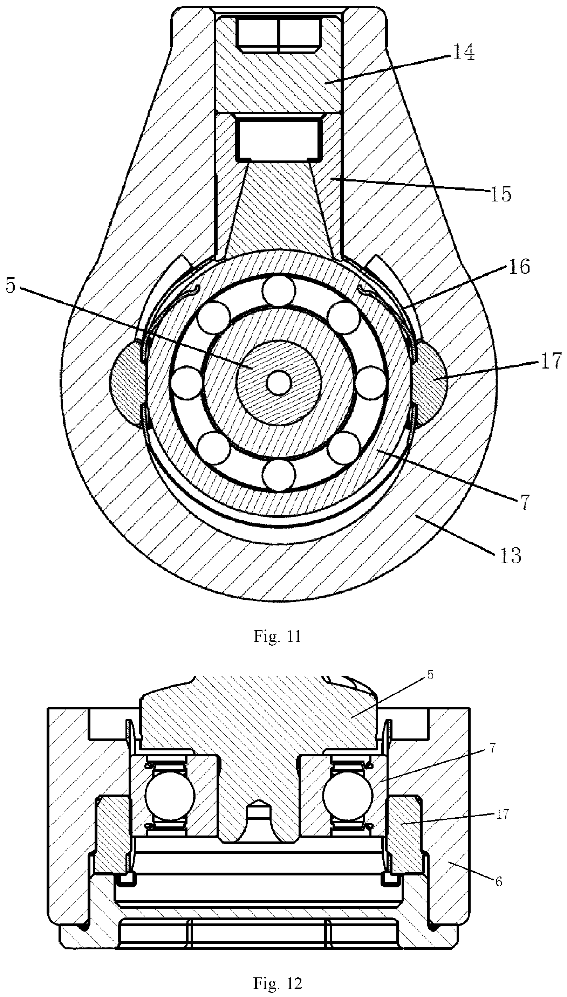

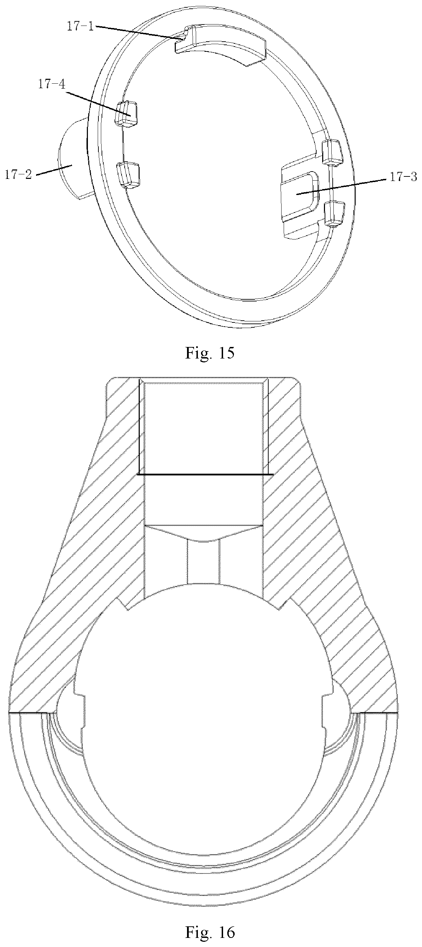

This embodiment provides a worm compression and support mechanism for an electric power steering system, including a worm 5, a worm wheel 6, a big-end bearing 3, a small-end bearing 7, a housing 1, a clamping nut 2, and a worm hub 4. Wherein the worm wheel 6 and the worm 5 are arranged within the housing 1, the upper end of the worm wheel 6 is matched with and connected to the worm 5, one end of the worm 5 is sleeved with a big-end bearing 3 and a worm hub 4, the outer side of the big-end bearing 3 is sleeved with the clamping nut 2; the other end of the worm 5 is sleeved with a small-end bearing 7, a compression assembly is arranged on the outer edge of the small-end bearing 7, the compression assembly is in tight contact with the outer ring of the small-end bearing 7, a support assembly is arranged above the small-end bearing 7, positioned above the compression assembly, with the lower surface of the support assembly is in tight contact with the compression assembly. As shown in Fig. 11 to Fig. 16, the compression assembly is a second compression assembly, the second compression assembly includes a second blade spring 16 and a second pre-tightening rubber 17, the outer edge of the small-end bearing 7 is sleeved with the second pre-tightening rubber 17, and the rear side of the second pre-tightening rubber 17 is connected to the second blade spring 16 through a buckle. The second blade spring 16 provides top damping and hard limiting at the top of the worm 5, side damping and hard limiting are provided at the side of the worm 5 relying on the second blade spring 16 and the second pre-tightening rubber 17, to support and limits the swings of the worm 5 and absorbs the impact on the worm 5, thereby eliminating the clearance in the worm wheel and worm 5 mechanism, reducing noise, and improving the hand feel; reducing the number of machined surfaces of the housing, simplifying installation, and reducing costs; reducing the outer dimensions of the housing, and occupying a smaller installation space. The pre-tightening force for the up-and-down swinging movement is provided by the first compression assembly, thereby eliminating the clearance of the worm wheel and worm deceleration mechanism; the vertical cushioning of the worm 5 is provided by the first compression assembly, avoiding noise caused by up-and-down impacts; the left-and-right swinging cushioning face is provided by the first compression assembly, avoiding noise caused by left-and-right swinging impacts; the vertical compression spring feature is provided by the second blade spring 16, that is, the elastic force for vertical direction is provided by the second blade spring 16, which can conveniently adjust the required vertical compression stiffness, thereby providing the required vertical compression force, controlling the clearance of the worm wheel and worm deceleration mechanism to zero clearance, and avoiding noise caused by the clearance of the deceleration mechanism; the appropriate vertical compression force is provided by the compression assembly, which can avoid excessive friction torque of the deceleration mechanism and improve the steering hand feel.

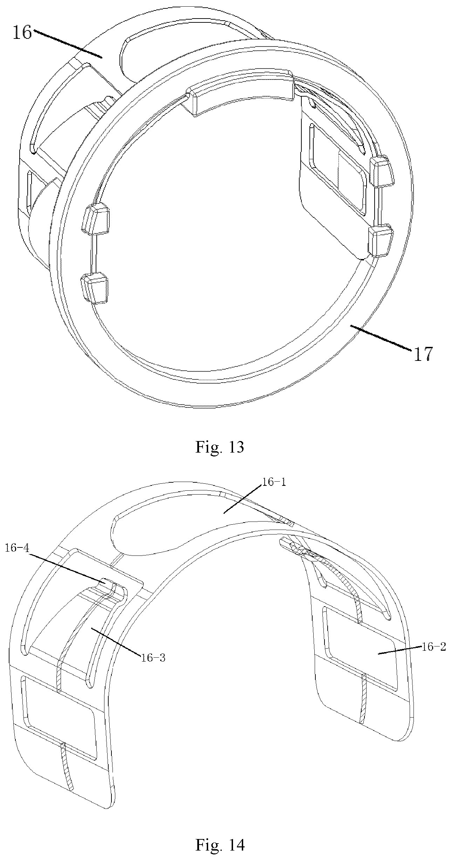

As a preferred embodiment, as shown in Fig. 14, the second blade spring 16 is of a U-shaped structure, the top of the second blade spring 16 is an arc structure, a second spring waist-shaped hole 16-1 is arranged at the top of the second blade spring 16, square holes 16-2 are respectively arranged on the left and right sides of the second blade spring 16, an inwardly bent trapezoidal inclined edge 16-3 is arranged on the second blade spring 16 above the square holes 16-2, the bottom of the trapezoidal inclined edge 16-3 is connected to the second blade spring 16, and the top of the trapezoidal inclined edge 16-3 is connected to a second clamping boss 16-4. The arc surface at the top of the second blade spring 16 is fitted with the spring support circular surface of the second housing 13, the trapezoidal inclined edge 16-3 is placed in the spring installation cavity of the housing with a clearance, and the second clamping boss 16-4 is in compressing contact with the outer ring of the small-end bearing 7. The first clamping boss 11-4 is in compressing contact with the outer ring of the small-end bearing 7, the second clamping boss 16-4 is symmetrically arranged, the pre-tightening forces in the horizontal direction cancel each other out, and a pre-tightening force is provided to the top of the worm 5 in the vertical direction. The vertical cushioning of the worm 5 is provided by the second blade spring 16, avoiding noise caused by up-and-down impacts; the clearance of the worm wheel and worm deceleration mechanism is controlled to be zero clearance, avoiding noise caused by the clearance of the deceleration mechanism, which can avoid excessive friction torque of the deceleration mechanism and improve the steering hand feel.

As a preferred embodiment, as shown in Fig. 13 to Fig. 15, the second pre-tightening rubber 17 is a ring-shaped structure, the inner side of the top of the second pre-tightening rubber 17 is connected to a snap-fit groove 17-1, the inner faces on the left and right sides of the middle section of the second pre-tightening rubber 17 are respectively connected to the arc columns 17-2, the inner face of the arc column 17-2 is a plane, the inner face of the arc column 17-2 is connected to a boss 2, several protrusions 17-4 are respectively arranged on the front end face of the second pre-tightening rubber 17 at the connection between the arc column 17-2 and the second pre-tightening rubber 17. The arc column 17-2 of the second pre-tightening rubber 17 is in tight contact with and matched with the housing, thereby causing the arc column 17-2 to be interference-compressed between the outer ring of the small-end bearing 7 and the housing through the housing, and providing side pre-tightening force. The boss 17-3 of the second pre-tightening rubber 17 is inserted into the square hole 16-2 of the second blade spring 16 with a clearance, the arc surface at the top of the second blade spring 16 is in tight contact with the snap-fit groove 17-1 of the second pre-tightening rubber 17 and the end face of the protrusion 17-4, thereby assembling the second pre-tightening rubber 17 and the second blade spring 16 into a small assembly, which is then inserted into the cavity of the second housing 13 until the arc-shaped end face of the second pre-tightening rubber 17 is in tight contact with the soft rubber support end face of the second housing 13.

As a preferred embodiment, as shown in Fig. 11 to Fig. 16, the second support assembly includes a second adjusting bolt and a second clamping pin, the bottom of the second clamping pin is arranged on the top of the small-end bearing, the second adjusting bolt is arranged on the top of the second clamping pin, and the structures of the second adjusting bolt 14 and the second clamping pin 15 are consistent with the structures of the first adjusting bolt 9 and the first clamping pin 10 in Embodiment 1.

As a preferred embodiment, as shown in Fig. 11 to Fig. 16, the support assembly is a second support assembly; the second support assembly is matched with the second compression assembly, and the second compression assembly and the second support assembly are arranged within the second housing matched with the second compression assembly and the second support assembly. The arc column 17-2 of the second pre-tightening rubber 17 is in tight contact with and matched with the side soft rubber support face of the second housing 13, thereby causing the second pre-tightening rubber 17 to be interference-compressed between the outer ring of the small-end bearing 7 and the soft rubber assembly hole of the second housing 13 through the boss of the second housing 13, and providing side pre-tightening force. The second housing 13 is matched with the second support assembly and the second compression assembly, thereby facilitating the installation of the second support assembly and the second compression assembly, the second support assembly and the second compression assembly are limited through the second housing 13, thereby facilitating the second support assembly to limit the second compression assembly in the vertical direction, and facilitating the second compression assembly to provide top damping and hard limiting at the top of the worm 5, and to provide side damping and hard limiting at the side of the worm 5, to support and limit the swings of the worm 5 and to absorb the impact of the worm, thereby eliminating the clearance of the worm wheel and worm mechanism, reducing noise, and improving the hand feel.

When the worm wheel 6 and the worm 5 engage in meshing transmission, the worm 5 will drive the small-end bearing 7 to produce a radial swinging movement, when the meshing force is smaller, the spring force of the small-end pre-tightening force mechanism will compress the worm 5 against the worm wheel 6, thereby eliminating the gear clearance between the worm wheel and the worm, the compression force of the soft rubber of the small-end side cushioning mechanism eliminates the clearance between the small-end bearing 7 and the second housing 13, when the meshing force is larger, the hard material arc surface of the small-end pre-tightening force mechanism contacts the outer ring of the small-end bearing 7, thereby limiting the vertical position of the small-end bearing 7, the small-end bearing 7 of the small-end side cushioning mechanism contacts the small-end bearing side of the second housing 13 with hard limiting, thereby limiting the left-and-right positions of the small-end bearing.

### Embodiment 3

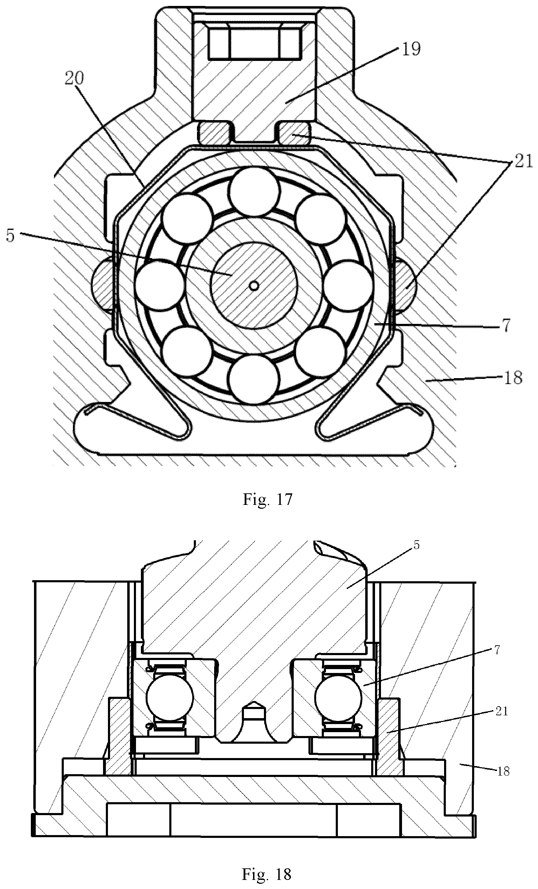

This embodiment provides a worm compression and support mechanism for an electric power steering system, including a worm 5, a worm wheel 6, a big-end bearing 3, a small-end bearing 7, a housing 1, a clamping nut 2, and a worm hub 4. Wherein the worm wheel 6 and the worm 5 are arranged within the housing 1, the upper end of the worm wheel 6 is matched with and connected to the worm 5, one end of the worm 5 is sleeved with a big-end bearing 3 and the worm hub 4, the outer side of the big-end bearing 3 is sleeved with the clamping nut 2 ; the other end of the worm 5 is sleeved with the small-end bearing 7, a compression assembly is arranged on the outer edge of the small-end bearing 7, the compression assembly is in tight contact with the outer ring of the small-end bearing 7, a support assembly is arranged above the small-end bearing 7, positioned above the compression assembly, with the lower surface of the support assembly is in tight contact with the compression assembly. As shown in Fig. 17 to Fig. 23, the compression assembly is a third compression assembly, the third compression assembly includes a third blade spring 20 and a third pre-tightening rubber 21, the outer edge of the small-end bearing 7 is sleeved with the third blade spring 20, and the third pre-tightening rubber 21 is snap-fit connected to the rear side of the third blade spring 20. The third blade spring 20 provides top damping and hard limiting at the top of the worm 5, side damping and hard limiting at the side of the worm 5 relying on the third blade spring 20 and the third pre-tightening rubber 21, to support and limit the swings of the worm 5 and to absorb the impact on the worm 5, thereby eliminating the clearance of the worm wheel and worm 5 mechanism, reducing noise, and improving the hand feel; reducing the number of machined surfaces of the housing, simplifying installation, and reducing costs; reducing the outer dimensions of the housing, and occupying a smaller installation space. The pre-tightening force for the up-and-down swinging movement is provided by the third compression assembly, thereby eliminating the clearance of the worm wheel and worm deceleration mechanism; the vertical cushioning of the worm 5 is provided by the third compression assembly, avoiding noise caused by up-and-down impacts; the left-and-right swinging cushioning face is provided by the third compression assembly, avoiding noise caused by left-and-right swinging impacts; the vertical compression spring feature is provided by the third blade spring 20, that is, the elastic force for vertical direction is provided by the third blade spring 20, which can conveniently adjust the required vertical compression stiffness, thereby providing the required vertical compression force, controlling the clearance of the worm wheel and worm deceleration mechanism to zero clearance, and avoiding noise caused by the clearance of the deceleration mechanism; the appropriate vertical compression force is provided by the compression assembly, which can avoid excessive friction torque of the deceleration mechanism and improve the steering hand feel.

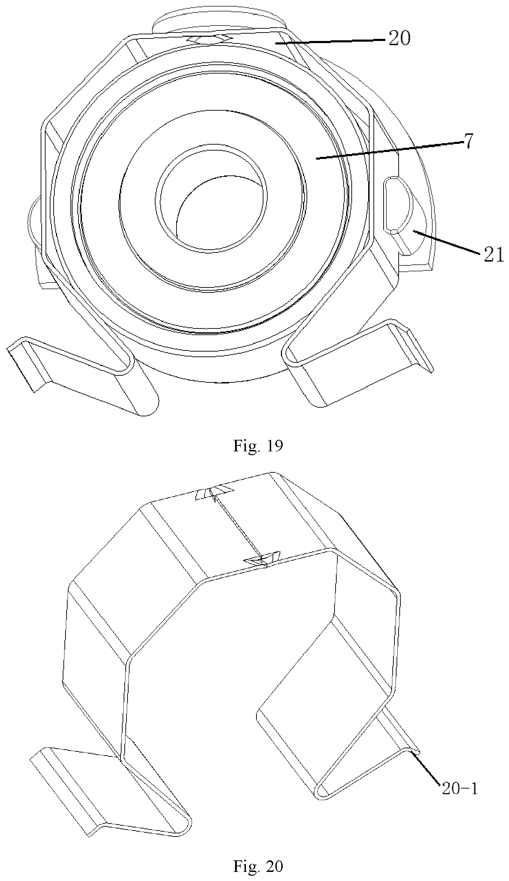

As a preferred embodiment, as shown in Fig. 19 and Fig. 20, the third blade spring 20 is an "Ω" shaped structure, the top of the third blade spring 20 is a plane, and the two sides of the bottom of the third blade spring 20 warp outwards respectively, and ends of outward warp are connected to the third clamping boss 20-1. Spring buckles are respectively arranged on the front and rear ends of the top of the third blade spring 20, the two spring buckles are symmetrically designed, and they clamping the third blade spring 20 in the middle of them in the width direction of the small-end bearing 7, the third clamping boss 20-1 is in compressing contact with the upper plane of the spring support hole of the third housing 18, providing a pre-tightening force to the top of the worm 5 in the vertical direction, the third blade spring 20 provides vertical cushioning for the worm 5, avoiding noise caused by up-and-down impacts; it controls the clearance of the worm wheel and worm deceleration mechanism to zero clearance, avoiding noise caused by the clearance of the deceleration mechanism; it can avoid excessive friction torque of the deceleration mechanism, improving the steering hand feel. The top, side, and bottom of the third blade spring 20 are tangent to the outer ring of the small-end bearing 7, forming line contact at five positions, the spring arm is placed within the spring installation cavity of the housing with a clearance, the third clamping boss 20-1 is in compressing contact with the upper plane of the spring support hole of the third housing 18, with the pre-tightening force in the horizontal direction canceling each other out, and providing a pre-tightening force to the top of the worm 5 in the vertical direction; the third blade spring 20 provides vertical cushioning for the worm 5, preventing noise caused by up-and-down impacts, controlling the clearance of the worm wheel and worm deceleration mechanism to zero clearance, preventing noise caused by the clearance of the deceleration mechanism; it can prevent excessive friction torque of the deceleration mechanism, enhancing the steering hand feel.

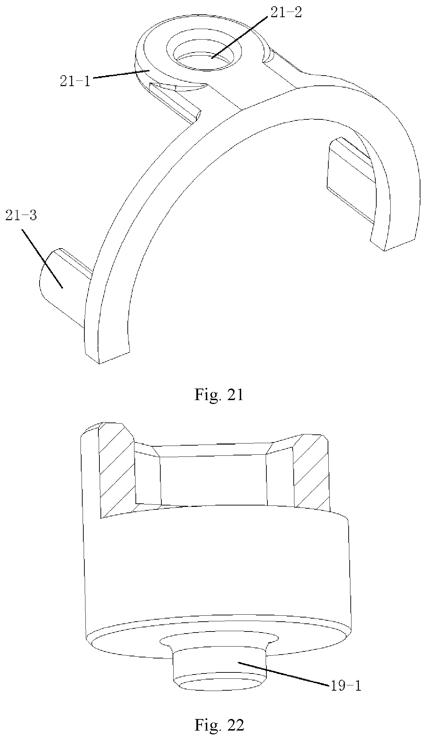

As a preferred embodiment, as shown in Fig. 21, the third pre-tightening rubber 21 is a semicircular ring structure, semicylinders 21-3 are respectively connected to the rear ends on both sides of the third pre-tightening rubber 21, the rear end of the top of the third pre-tightening rubber 21 is connected to the top rubber 21-1, a center hole 21-2 is arranged at the center of the top rubber. The semicylinder 21-3 of the third pre-tightening rubber 21 is interference-compressed between the side planes of the third blade spring 20, and provides side pre-tightening force, avoiding noise caused by side swing impacts; the semicylindrical protrusion 12-2 is in clearance fit with the housing, ensuring that the first pre-tightening rubber 12 can be assembled within the housing.

As a preferred embodiment, as shown in Fig. 22, the third support assembly includes a third adjusting bolt 19, the third adjusting bolt 19 is arranged on the top of the small-end bearing 7, the structure of the third adjusting bolt 19 is that a small cylinder 19-1 is connected to the bottom plane of the third adjusting bolt 19, and the small cylinder of the third adjusting bolt 19 is embedded in the center hole 21-2 of the top rubber 21-1 at the top of the third pre-tightening rubber 21. The external thread of the third adjusting bolt 19 is matched with and connected to the threaded hole of the third housing 18 through thread engagement, the bottom plane of the third adjusting bolt 19 is in compressing contact with the upper plane of the top rubber 21-1 of the third pre-tightening rubber 21, the lower plane of the top rubber 21-1 of the third pre-tightening rubber 21 is compressed and fitted to the top plane of the third blade spring 20, the small cylinder 19-1 of the third adjusting bolt 19 is inserted into the center hole 21-2 of the third pre-tightening rubber 21 with a clearance, and the end face of the small cylinder 19-1 forms a small clearance with the top plane of the third blade spring 20; half of the length of the outer ring of the small-end bearing 7 clamps the side of the third blade spring 20 in the clearance space formed by the hard limiting of the side of the small-end bearing 7 of the third housing 18.

As a preferred embodiment, the support assembly is a third support assembly; the third support assembly is matched with the third compression assembly, the third compression assembly and the third support assembly are arranged within the third housing matched with the third compression assembly and the third support assembly. The third housing 18 is matched with the third support assembly and the third compression assembly, facilitating the installation of the third support assembly and the third compression assembly, the third housing 18 limits the third support assembly and the third compression assembly, thereby facilitating the third support assembly to limit the third compression assembly in the vertical direction, and facilitating the third compression assembly to provide top damping and hard limiting at the top of the worm 5, to provide side damping and hard limiting at the side of the worm 5, to support and limit the swings of the worm 5 and to absorb the impact of the worm, thereby eliminating the clearance of the worm wheel and worm mechanism, reducing noise, and improving the hand feel.

When the worm wheel 6 and the worm 5 engage in meshing transmission, the worm 5 will drive the small-end bearing 7 to produce a radial swinging movement, when the meshing force is smaller, the spring force of the small-end pre-tightening force mechanism presses the worm 5 against the worm wheel 6, thereby eliminating the gear clearance between the worm wheel and the worm, the compressive force of the soft rubber in the small-end side pre-tightening mechanism eliminates the clearance between the small-end bearing 7 and the third housing 18; when the meshing force is larger, the small cylinder 19-1 of the third adjusting bolt 19 in the small-end pre-tightening force mechanism comes into planar contact with the top plane of the third blade spring 20, thereby limiting the vertical position of the small-end bearing 7, the side plane of the third blade spring 20 in the small-end side cushioning mechanism comes into hard limiting contact with the side of the small-end bearing 7 of the third housing 18, thereby limiting the left-and-right positions of the small-end bearing 7.

### Embodiment 4

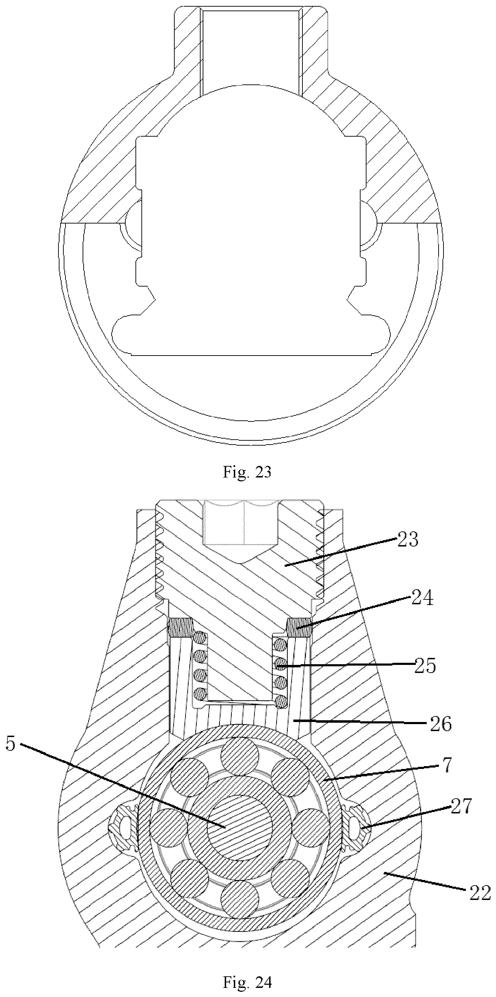

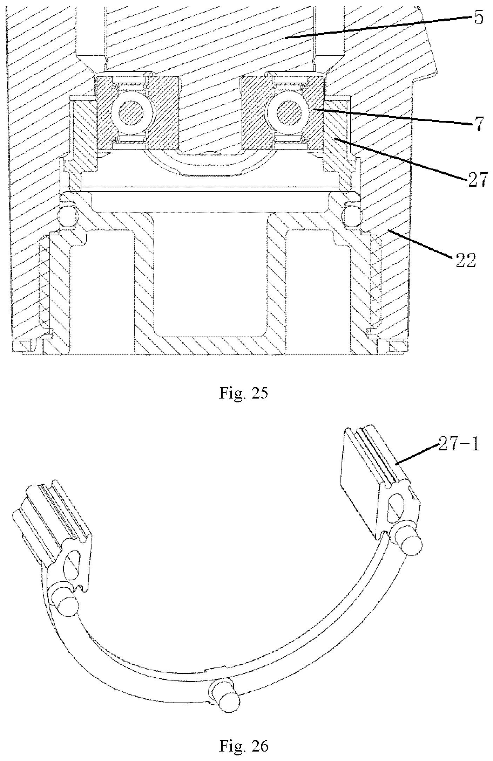

This embodiment provides a worm compression and support mechanism for an electric power steering system, including a worm 5, a worm wheel 6, a big-end bearing 3, a small-end bearing 7, a housing 1, a clamping nut 2, and a worm hub 4, wherein the worm wheel 6 and the worm 5 are arranged within the housing 1, the upper end of the worm wheel 6 is matched with and connected to the worm 5, one end of the worm 5 is sleeved with the big-end bearing 3 and the worm hub 4, the outer side of the big-end bearing 3 is sleeved with the clamping nut 2; the other end of the worm 5 is sleeved with the small-end bearing 7, a compression assembly is arranged on the outer edge of the small-end bearing 7, the compression assembly is in tight contact with the outer ring of the small-end bearing 7, a support assembly is arranged above the small-end bearing 7, positioned above the compression assembly, with the lower surface of the support assembly is in tight contact with the compression assembly. As shown in Fig. 24 to Fig. 29, the compression assembly is a fourth compression assembly, the compression assembly includes the fourth pre-tightening rubber 27, the lower outer edge of the small-end bearing 7 is sleeved with the fourth pre-tightening rubber 27, the fourth pre-tightening rubber 27 is a semicircular arc ring structure, and the left-and-right side end faces at the top of the fourth pre-tightening rubber 27 are respectively connected to an outer protruding structure 27-1, and the inner side face of the outer protruding structure 27-1 is a rectangular plane. The fourth pre-tightening rubber 27 provides side damping and hard limiting on the side of the worm 5 to support and limit the swings of the worm 5 and to absorb the impact on the worm 5, thereby eliminating the clearance in the worm wheel and worm 5 mechanism, reducing noise, and improving the hand feel; reducing the number of machined surfaces on the housing, simplifying installation, and reducing costs; reducing the outer dimensions of the housing, thereby occupying a smaller installation space. The pre-tightening force for up-and-down swinging movement is provided by the fourth compression assembly, thereby eliminating the clearance in the worm wheel and worm deceleration mechanism; vertical cushioning for the worm 5 is provided by the fourth compression assembly to avoid noise caused by up-and-down impacts; side cushioning faces for swinging movement are provided by the fourth compression assembly to avoid noise caused by side swinging impacts; an appropriate vertical compression force is provided by the fourth compression assembly to prevent excessive friction torque in the deceleration mechanism, thereby improving the steering feel.

As a preferred embodiment, as shown in Fig. 24, Fig. 27, and Fig. 28, the fourth support assembly includes a first support sleeve 26, a first helical spring 25, a rubber pad 23, and a first adjusting screw 23, the top of the small-end bearing 7 is provided with the first adjusting screw 23, the lower part of the first adjusting screw 23 is sleeved with the first helical spring 25, and the outer side of the first helical spring 25 is sleeved with the first support sleeve 26, a rubber pad 24 is sleeved at the first adjusting screw 23 located at the top of the first support sleeve 26, and the bottom of the first support sleeve 26 is connected to the top end face of the small-end bearing 7. The first support sleeve 26 is installed in the fourth housing 22, with the waist-shaped side of the first support sleeve 26 is matched with the waist-shaped ring of the fourth housing 22, the first support sleeve 26 can move up and down, the bottom arc surface of the first support sleeve 26 is matched and contact with the outer ring of the small-end bearing 7, the first helical spring 25 is installed in the hole of the first support sleeve 26, with the bottom of the first helical spring 25 supported by the annular surface of the first support sleeve 26, there is a threaded section in the first adjusting screw 23, there is a threaded hole in the fourth housing 22, after the rubber pad 24 is mounted onto the first adjusting screw 23 and then screwed together into the fourth housing 22, the top of the first helical spring 25 is supported by the shoulder of the first adjusting screw 23, the bottom of the rubber pad 24 is in contact with the top face of the first support sleeve 26, and the side of the rubber pad 24 is matched with the circular hole wall of the fourth housing 22, the cylindrical surface of the first adjusting screw 23 is used for limiting the first helical spring 25, after being assembled, the first adjusting screw 23 is screwed to an appropriate position, and the compression of the first helical spring 25 provides the elastic force for the matched pre-tightening of the worm wheel and worm, there is a certain clearance between the bottom of the first adjusting screw 23 and the boss inside the first support sleeve 26, when the small-end bearing 7 moves upward, at the initial stage, the first helical spring 25 and the rubber pad 24 are compressed to provide damping, and finally, the boss of the first support sleeve 26 contacts the bottom of the first adjusting screw 23, that is, it achieves hard limiting. By means of the threaded connection between the first adjusting screw 23 and the fourth housing 22, the first support sleeve 26 is limited in the vertical direction, and the pre-tightening force applied by the first support sleeve 26 to the top of the worm 5 is adjusted through the first helical spring 25, thereby providing the required vertical compression force, controlling the clearance of the worm wheel and worm deceleration mechanism to achieve zero clearance, and avoiding noise caused by the clearance in the deceleration mechanism.

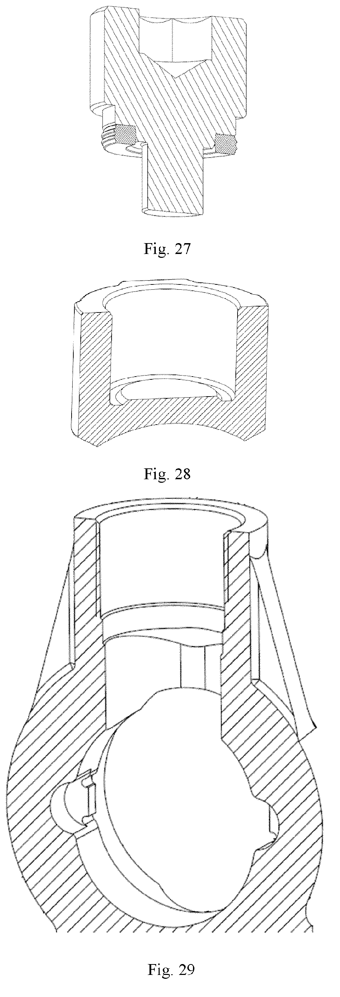

As a preferred embodiment, as shown in Fig. 27, the first adjusting screw 23 is a T-shaped structure, an external thread is arranged on the upper outer edge of the first adjusting screw 23, the middle portion of the first adjusting screw 23 is sleeved with a rubber pad 24, and the lower part of the first adjusting screw 23 is sleeved with a first helical spring 25. There is a threaded section in the first adjusting screw 23, there is a threaded hole in the fourth housing 22, and the rubber pad 24 is mounted onto the first adjusting screw 23 and then screwed together into the fourth housing 22, the top of the first helical spring 25 is supported by the shoulder of the first adjusting screw 23. The above arrangement facilitates the connection of the first adjusting screw 23, the rubber pad 24, and the first helical spring 25.

As a preferred embodiment, as shown in Fig. 28, the first support sleeve 26 is a cylindrical structure, a recess matched with and connected to the lower part of the first adjusting screw 23 is arranged on the top of the first support sleeve 26, and the bottom of the first support sleeve 26 is an arc surface. The above arrangement facilitates pre-positioning of the bottom of the first adjusting screw 23 and the first support sleeve 26. The bottom of the first support sleeve 26 is an arc surface, allowing the bottom of the first support sleeve 26 to be better fitted and compressed to the small-end bearing 7.

As a preferred embodiment, the support assembly is a fourth support assembly; the fourth support assembly is matched with the fourth compression assembly, and the fourth compression assembly and the fourth support assembly are arranged within the fourth housing 22 matched with the fourth compression assembly and the fourth support assembly. The fourth housing 22 is matched with the fourth support assembly and the fourth compression assembly, facilitating the installation of the fourth support assembly and the fourth compression assembly, the fourth housing 22 limits the fourth support assembly and the fourth compression assembly, thereby facilitating the fourth support assembly to limit the fourth compression assembly in the vertical direction, and facilitating the fourth compression assembly to provide top damping and hard limiting at the top of the worm 5, and to provide side damping and hard limiting at the side of the worm 5, to support and limit the swings of the worm 5 and to absorb the impact of the worm, which eliminates the clearance in the worm wheel and worm mechanism, reduces noise, and improves the hand feel.

The fourth pre-tightening rubber 27 is installed between the fourth housing 22 and the small-end bearing 7, the rectangular plane of the outer protruding structure 27-1 on both sides of the fourth pre-tightening rubber 27 is in contact with the small-end bearing 7, the outer surface of the fourth pre-tightening rubber 27 is in contact with the arc surface of the fourth housing 22, additionally, hard limiting surfaces are arranged on both sides within the fourth housing 22 for the hard limiting of the small-end bearing 7. When the small-end bearing 7 generates horizontal swinging movement, it can absorb the horizontal impact force.

### Embodiment 5

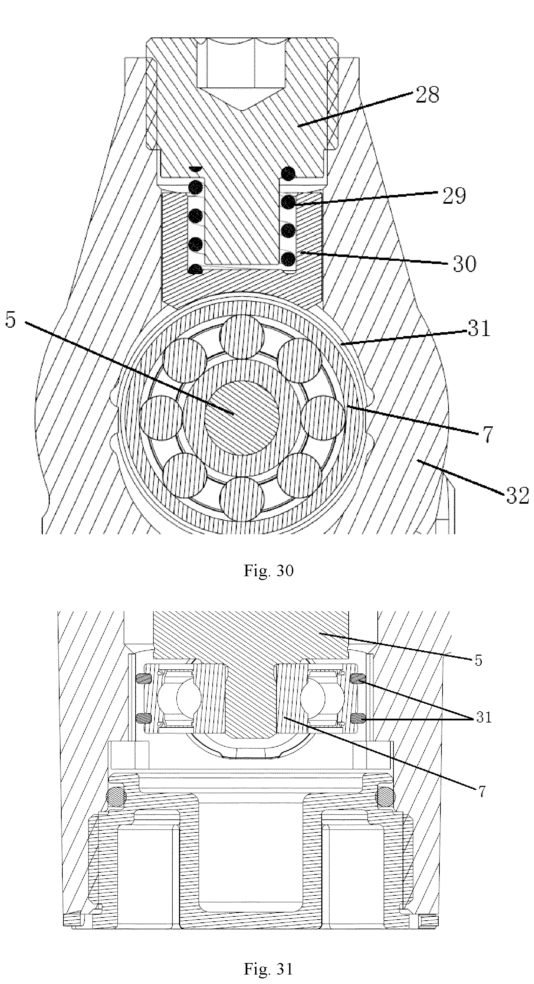

This embodiment provides a worm compression and support mechanism for an electric power steering system, including a worm 5, a worm wheel 6, a big-end bearing 3, a small-end bearing 7, a housing 1, a clamping nut 2, and a worm hub 4, wherein the worm wheel 6 and the worm 5 are arranged within the housing 1, the upper end of the worm wheel 6 is matched with and connected to the worm 5, one end of the worm 5 is sleeved with the big-end bearing 3 and the worm hub 4, the outer side of the big-end bearing 3 is sleeved with the clamping nut 2; the other end of the worm 5 is sleeved with the small-end bearing 7, a compression assembly is arranged on the outer edge of the small-end bearing 7, the compression assembly is in tight contact with the outer ring of the small-end bearing 7, a support assembly is arranged above the small-end bearing 7, positioned above the compression assembly, with the lower surface of the support assembly is in tight contact with the compression assembly. As shown in Fig. 30- Fig. 32, the compression assembly is a fifth compression assembly, which includes a fifth pre-tightening rubber, the upper and lower parts of the outer edge of the small-end bearing 7 are respectively sleeved with the fifth pre-tightening rubber 31; and the fifth pre-tightening rubber is a rubber ring 31. The rubber ring 31 can provide damping in the radial direction around the entire circumference of the bearing, that is, offer cushioning effect to the top and sides, the rubber ring 31 is elastic and can provide damping and limiting effect in the radial direction around the entire circumference of the worm 5, supporting and limiting the swings of the worm 5 and absorbing the impact of the worm 5, which can eliminate the clearance in the worm 5 mechanism, reduce noise, and improve the hand feel; reduce the number of machined surfaces on the housing, simplify installation, and lower costs; and reduce the outer dimensions of the housing, occupying a smaller installation space.

Preferably, the fifth support assembly includes a second support sleeve 30, a second helical spring 29, and a second adjusting screw 28, and the second adjusting screw 28 is arranged on the top of the small-end bearing 7, the lower part of the second adjusting screw 28 is sleeved with the second helical spring 29, the outer side of the second helical spring 29 is sleeved with the second support sleeve 30, and the bottom of the second support sleeve 30 is connected to the top end face of the small-end bearing 7. Wherein, the structure of the second adjusting screw 28 is consistent with the structure of the first adjusting screw 23; the structure of the second helical spring 29 is consistent with the structure of the first helical spring 25; and the structure of the second support sleeve 30 is consistent with the structure of the first support sleeve 26.

Preferably, the support assembly is a fifth support assembly; the fifth support assembly is matched with the fifth compression assembly, and the fifth compression assembly and the fifth support assembly are arranged within the fifth housing 32, which is matched with the fifth compression assembly and the fifth support assembly. The fifth housing 32 is matched with the fifth support assembly and the fifth compression assembly, facilitating the installation of the fifth support assembly and the fifth compression assembly, and the fifth housing 32 limits the fifth support assembly and the fifth compression assembly, thereby facilitating the fifth support assembly to limit the fifth compression assembly in the vertical direction, and facilitating the fifth compression assembly to provide top damping and hard limiting at the top of the worm 5, to provide side damping and hard limiting at the side of the worm 5, to support and limit the swings of the worm 5 and to absorb the impact of the worm, thereby eliminating the clearance in the worm wheel and worm mechanism, reducing noise, and improving the hand feel.

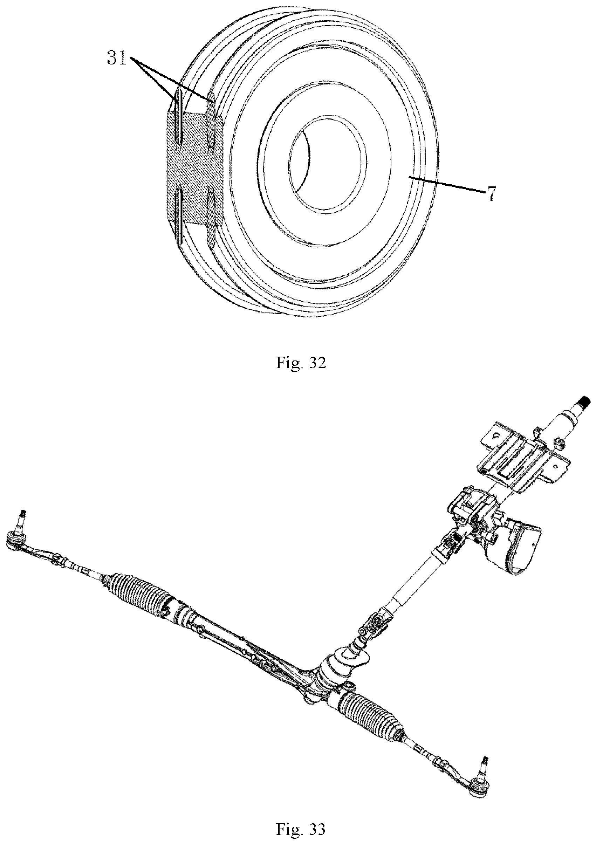

As shown in Fig. 33, the steering wheel of the EPSc steering system is connected to the input shaft through a spline, when the driver applies torque, hereinafter referred to as manual force, to rotate the steering wheel, it drives the input shaft to rotate, the input shaft is connected to the steering column through a spline, and the steering column is connected to the output shaft through a spline, transmitting the manual force to the output shaft, at the same time, the torque sensor installed on the output shaft reads the torque signal and transmits this signal to the control unit. After calculation by the control unit, the power motor outputs the corresponding torque, hereinafter referred to as power force and rotational speed, then the speed is reduced and the torque is increased by the deceleration mechanism, the power force is applied to the output shaft, at this moment, the torque output by the output shaft is the total torque of manual force plus power force. The output shaft is connected to the intermediate shaft through a spline, and the intermediate shaft is connected to the steering gearbox through a spline, then the total torque is transmitted to the steering gearbox, the steering gearbox can convert the rotation of the steering wheel into the left-and-right movement of the rack, this movement is output to the left and right tie rods through the pinion-rack mechanism, thereby converting the rotational movement of the steering wheel into the left-and-right swings of the wheels, thereby realizing the power steering function of the vehicle.

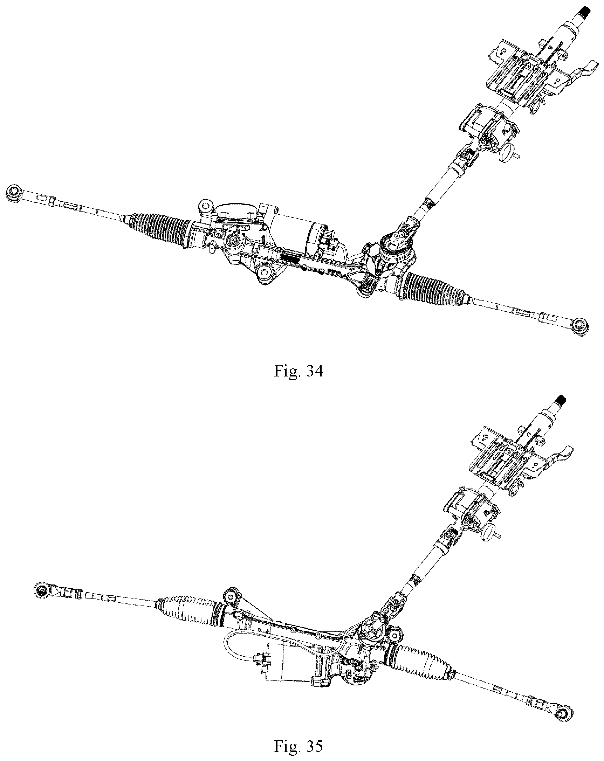

As shown in Fig. 34, it is the EPSdp steering system, the steering wheel is connected to the input shaft through a spline, when a driver applies manual force to rotate the steering wheel, it drives the input shaft to rotate, the input shaft is connected to the steering column through a spline, the steering column is connected to the intermediate shaft through a spline, the hand power is transmitted to the first pinion of the steering gearbox after the intermediate shaft is connected to the steering gearbox through a spline, , thereby the steering gearbox can convert the rotation of the steering wheel into the left-and-right movement of the rack, the movement is output to the left-and-right tie rods through the pinion-rack mechanism, thereby converting the rotational movement of the steering wheel into the left-and-right swing of the wheels. Unlike EPSc, the torque sensor installed on the steering gearbox reads the manual force torque signal and transmits this signal to the control unit. After calculation by the control unit, the power motor outputs the corresponding power force, then the speed is reduced and the torque is increased by the deceleration mechanism, the power force is applied to the output shaft, the torque output by the output shaft is transmitted to the second pinion of the steering gearbox, the second pinion produces a pinion-rack meshing movement with the rack of the steering gearbox, converting the rotation of the steering wheel into the left-right movement of the rack, the movement is output to the left-and-right tie rods through the pinion-rack mechanism, at this moment, the motor power and the manual force from the steering wheel simultaneously act on the rack, thereby realizing the power steering function of the vehicle.

As shown in Fig. 35, it is the EPSp steering system, the steering wheel is connected to the input shaft through a spline, when the driver applies manual force to rotate the steering wheel, it drives the input shaft to rotate, the input shaft is connected to the steering column through a spline, the steering column is connected to the intermediate shaft through a spline, the manual force is transmitted to the first pinion of the steering gearbox after the intermediate shaft is connected to the steering gearbox through a spline, , thereby the steering gearbox converts the rotation of the steering wheel to the left-and-right movement of the rack, the movement is output to the left-and-right tie rods through the pinion-rack mechanism, thereby converting the rotational movement of the steering wheel into the left-and-right swings of the wheels. Unlike EPSc, the torque sensor installed on the steering gearbox reads the manual force torque signal and transmits this signal to the control unit. After calculation by the control unit, the power motor outputs the corresponding power force, then the speed is reduced and the torque is increased by the deceleration mechanism, the power force is applied to the output shaft, the torque output by the output shaft is transmitted to the first pinion of the steering gearbox, the first pinion produces a pinion-and-rack meshing movement with the rack of the steering gearbox, converting the rotation of the steering wheel into the left-and-right movement of the rack, the movement is output to the left and right tie rods through the pinion-rack mechanism, at this moment, the motor power and the manual force on the steering wheel simultaneously act on the rack, thereby realizing the power steering function of the vehicle.

The present invention relies on blade springs or helical springs to provide a pre-tightening force, the top relies on a combination of the clamping pins and the locking bolts, or a combination of rubber pads, support sleeves, and adjusting screws to provide top damping and hard limiting, the side relies on rubber and the machined surface of the housing to provide side damping and hard limiting, to support and limit the swing of the worm and to absorb the impact of the worm, thereby eliminating the clearance of the worm wheel and worm mechanism, reducing noise, and improving the hand feel, it reduces the number of machined surfaces of the housing, simplifies installation, and lowers costs, it reduces the outer dimensions of the housing, occupying a smaller installation space; it provides a pre-tightening force for up-and-down swinging movement, thereby eliminating the clearance of the worm wheel and worm deceleration mechanism; it provides vertical damping for the worm, avoiding noise caused by up-and-down impacts; it provides left-and-right damping for the worm, avoiding noise caused by left-and-right swinging impacts; it provides vertical compression spring feature, which can conveniently adjust the required vertical compression stiffness, thereby providing the required vertical compression force, controlling the clearance of the worm wheel and worm deceleration mechanism to zero clearance, and avoiding noise caused by the clearance of the deceleration mechanism, and it provides appropriate vertical compression force, which can avoid excessive friction torque of the deceleration mechanism, enhancing the steering hand feel.

Although the specific embodiments of the present invention have been described above, those skilled in the art should understand that these are merely illustrative examples, and various changes or modifications can be made to these embodiments without departing from the principles and spirit of the present invention. Therefore, the scope of protection of the present invention is defined by the appended claims.

## Claims

1. A worm compression and support mechanism for an electric power steering system, including a worm, a worm wheel, a big-end bearing, a small-end bearing, and a housing, **characterized in that**, the worm wheel (6) and the worm (5) are arranged within the housing (1), an upper end of the worm wheel (6) is matched with and connected to the worm (5), one end of the worm (5) is sleeved with the big-end bearing (3), the other end of the worm (5) is sleeved with the small-end bearing (7), a compression assembly is arranged on an outer edge side of the small-end bearing (7), the compression assembly is in tight contact with an outer ring of the small-end bearing (7), a support assembly is arranged on an upper side of the small-end bearing (7), the support assembly is arranged above the compression assembly, and a lower surface of the support assembly is in tight contact with the compression assembly.

2. The worm compression and support mechanism for an electric power steering system according to claim 1, **characterized in that**, the compression assembly is a first compression assembly, the first compression assembly includes a first blade spring and a first pre-tightening rubber, an upper part of the outer edge of the small-end bearing (7) is sleeved with the first blade spring (11), and a lower part of the outer edge of the small-end bearing (7) is sleeved with the first pre-tightening rubber (12).

3. The worm compression and support mechanism for an electric power steering system according to claim 2, **characterized in that**, a top of the first blade spring (11) is an arc-shaped middle end face (11-1), a top of left-and-right ends of the middle end face (11-1) are respectively connected to a spring buckle (11-2), a bottom of left-and-right ends of the middle end face (11-1) are respectively connected to one end of a spring arm (11-3), and the other end of the spring arm (11-3) is connected to a first clamping boss (11-4); a first spring waist-shaped hole (11-5) is arranged in a middle portion of the middle end face (11-1); and the spring arm (11-3) consists of two inwardly inclined bent panels;
preferably, the first blade spring (11) is a butterfly-shaped structure;
preferably, a cross-section of the spring arm (11-3) is a C-shaped structure;
and/or, the first pre-tightening rubber (12) is a U-shaped structure, ribs (12-1) are respectively connected to left and right sides of an upper part of the first pre-tightening rubber (12), and a semicylindrical protrusion (12-2) is connected to the first pre-tightening rubber (12) below the ribs (12-1).

4. The worm compression and support mechanism for an electric power steering system according to claim 2, **characterized in that**, the support assembly is a first support assembly, the first support assembly is matched with the first compression assembly, and the first compression assembly and a first support assembly are arranged within a first housing (8) matched with the first compression assembly and the first support assembly;
preferably, the first support assembly includes a first adjusting bolt and a first clamping pin, a bottom of the first clamping pin (10) is arranged on a top of the small-end bearing (7), and the first adjusting bolt (9) is arranged on a top of the first clamping pin (10).

5. The worm compression and support mechanism for an electric power steering system according to claim 4, **characterized in that**, an external thread is arranged on an outer edge of the first adjusting bolt (9), a bottom of the first adjusting bolt (9) is a plane, and a top of the first adjusting bolt (9) is connected to an inner hexagonal recess (9-1);
and/or, an upper part of the first clamping pin (10) is a cylindrical structure, a lower part of the first clamping pin (10) is a waist-shaped column structure; a positioning square hole (10-2) is arranged at a top of the first clamping pin (10), and a bottom of the first clamping pin (10) is an arc-shaped structure;
preferably, a soft rubber (10-1) is embedded in a lower part of the first clamping pin (10); and an upper part of the first clamping pin (10) and a lower part of the first clamping pin (10) are of a one-piece structure;
preferably, the worm compression and support mechanism for the electric power steering system further includes a clamping nut and a worm hub, with one end of the worm (5) sleeved with the worm hub (4).

6. The worm compression and support mechanism for an electric power steering system according to claim 1, **characterized in that**, the compression assembly is a second compression assembly, the second compression assembly includes a second blade spring and a second pre-tightening rubber, an outer edge of the small-end bearing (7) is sleeved with the second pre-tightening rubber (17), and a rear side buckle of a second pre-tightening rubber (17) is connected to the second blade spring (16) through a buckle.

7. The worm compression and support mechanism for an electric power steering system according to claim 6, **characterized in that**, the second blade spring (16) is of a U-shaped structure, a top of a second blade spring (16) is an arc structure, a second spring waist-shaped hole (16-1) is arranged at the top of a second blade spring (16), square holes (16-2) are respectively arranged on left and right sides of the second blade spring (16), an inwardly bent trapezoidal inclined edge (16-3) is arranged on the second blade spring (16) above the square holes (16-2), a bottom of the trapezoidal inclined edge (16-3) is connected to the second blade spring (16), and a top of a trapezoidal inclined edge (16-3) is connected to a second clamping boss (16-4);
and/or, the second pre-tightening rubber (17) is a ring-shaped structure, an inner side of a top of the second pre-tightening rubber (17) is connected to a snap-fit groove (17-1), inner side faces on left and right sides of a middle portion of the second pre-tightening rubber (17) are respectively connected to an arc column (17-2), an inner side face of the arc column (17-2) is a plane, an inner side face of the arc column (17-2) is connected to a boss (17-3) , several protrusions (17-4) are respectively arranged on a front end face of the second pre-tightening rubber (17) at a connection between the arc column (17-2) and the second pre-tightening rubber (17).

8. The worm compression and support mechanism for an electric power steering system according to claim 6, **characterized in that**, the support assembly is a second support assembly; the second support assembly is matched with the second compression assembly, and the second compression assembly and a second support assembly are arranged within a second housing (13) matched with the second compression assembly and the second support assembly;
preferably, the second support assembly includes a second adjusting bolt and a second clamping pin, a bottom of the second clamping pin (15) is arranged on a top of the small-end bearing (7), and the second adjusting bolt (14) is arranged on a top of the second clamping pin.

9. The worm compression and support mechanism for an electric power steering system according to claim 1, **characterized in that**, the compression assembly is a third compression assembly, the third compression assembly includes a third blade spring and a third pre-tightening rubber, an outer edge of the small-end bearing (7) is sleeved with the third blade spring (20), and a rear side of the third blade spring (20) is clamped with the third pre-tightening rubber (21).

10. The worm compression and support mechanism for an electric power steering system according to claim 9, **characterized in that**, a top of the third blade spring (20) is a plane, two sides of a bottom of the third blade spring (20) warp outwards respectively, and ends of outward warp are connected to a third clamping boss (20-1);
preferably, the third blade spring (20) is an "Ω" shaped structure;
and/or, the third pre-tightening rubber (21) is a semicircular ring structure, semicylinders (21-3) are respectively connected to rear ends on left and right sides of the third pre-tightening rubber (21), a top rubber (21-1) is connected to a rear end at a top of the third pre-tightening rubber (21), and a center hole (21-2) is arranged on a center of the top rubber (21-1).

11. The worm compression and support mechanism for an electric power steering system according to claim 9, **characterized in that**, the support assembly is a third support assembly; the third support assembly is matched with the third compression assembly, and the third compression assembly and a third support assembly are arranged within a third housing (18) matched with the third compression assembly and the third support assembly;
preferably, the third support assembly includes a third adjusting bolt, the third adjusting bolt (19) is arranged on a top of the small-end bearing (7), the structure of the third adjusting bolt (19) is that a small cylinder (19-1) is connected to a bottom plane of the first adjusting bolt (9), and the small cylinder (19-1) of the third adjusting bolt (19) is embedded in a center hole (21-2) of a top rubber (21-1) at a top of the third pre-tightening rubber (21).

12. The worm compression and support mechanism for an electric power steering system according to claim 1, **characterized in that**, the compression assembly is a fourth compression assembly, the fourth compression assembly includes a fourth pre-tightening rubber, and a lower part of an outer edge of the small-end bearing (7) is sleeved with the fourth pre-tightening rubber (27); the fourth pre-tightening rubber (27) is a semicircular arc ring structure, and left and right end faces of a top of the fourth pre-tightening rubber (27) are respectively connected to an outer protruding structure (27-1), and an inner side face of the outer protruding structure (27-1) is a rectangular plane.

13. The worm compression and support mechanism for an electric power steering system according to claim 12, **characterized in that**, the support assembly is a fourth support assembly; the fourth support assembly is matched with the fourth compression assembly, and the fourth compression assembly and a fourth support assembly are arranged within a fourth housing (22) matched with the fourth compression assembly and the fourth support assembly;
preferably, the fourth support assembly includes a first support sleeve, a first helical spring, a rubber pad, and a first adjusting screw, the first adjusting screw (23) is arranged on a top of the small-end bearing (7) , a lower part of the first adjusting screw (23) is sleeved with the first helical spring (25), an outer side of the first helical spring (25) is sleeved with the first support sleeve (26), the rubber pad (24) is sleeved at the first adjusting screw (23) located at a top of the first support sleeve (26), a bottom of the first support sleeve (26) is connected to a top end face of the small-end bearing (7).

14. The worm compression and support mechanism for an electric power steering system according to claim 13, **characterized in that**, the first adjusting screw (23) is a T-shaped structure, an external thread is arranged on an upper outer edge of the first adjusting screw (23), a middle portion of the first adjusting screw (23) is sleeved with the rubber pad (24), and a lower part of the first adjusting screw (23) is sleeved with the first helical spring (25);
and/or, the first support sleeve (26) is a cylindrical structure, a recess matched with and connected to a lower part of a first adjusting screw (23) is arranged on a top of the first support sleeve (26), and a bottom of the first support sleeve (26) is an arc surface.

15. The worm compression and support mechanism for an electric power steering system according to claim 1, **characterized in that**, the compression assembly is a fifth compression assembly, and the fifth compression assembly includes a fifth pre-tightening rubber, upper and lower parts of the outer edge of the small-end bearing (7) are respectively sleeved with the fifth pre-tightening rubber (31); and the fifth pre-tightening rubber (31) is a rubber ring.

16. The worm compression and support mechanism for an electric power steering system according to claim 15, **characterized in that**, the support assembly is a fifth support assembly; the fifth support assembly is matched with the fifth compression assembly, and the fifth compression assembly and a fifth support assembly are arranged within a fifth housing (32) matched with the fifth compression assembly and the fifth support assembly;
preferably, the support assembly five includes a second support sleeve, a second helical spring, and a second adjusting screw, the second adjusting screw (28) is arranged on a top of the small-end bearing (7), a lower part of the second adjusting screw (28) is sleeved with the second helical spring (29), an outer side of the second helical spring (29) is sleeved with the second support sleeve (30), and a bottom of the second support sleeve (30) is connected to a top end face of the small-end bearing (7).
